# EUROPEAN PATENT APPLICATION

(11) **EP 2 211 544 A1**
(43) Date of publication of application: **28.07.2010**
(21) Application number: 08847334.3
(22) Date of filing: 25.09.2008
(51) Int. Cl.: H04N 7/01

(54) **FILM MODE DETERMINATION APPARATUS AND DETERMINATION METHOD**

(30) Priority: 06.11.2007 JP 2007288422
(71) Applicant: Sharp Kabushiki Kaisha, Osaka-shi, Osaka 545-8522 (JP)
(72) Inventor: IZUMI, Naoji, Osaka-shi, Osaka 545-8522 (JP); MUKAI, Toshiroh, Osaka-shi, Osaka 545-8522 (JP)
(74) Representative: Müller - Hoffmann & Partner
(86) International application number: PCT/JP2008/067261
(87) International publication number: WO 2009/060674

(57) **Abstract**

In a conventional technology in which a film mode is determined when IP (interlace/progressive) conversion processing is performed, a large number of frame memory sections, that is, a large amount of memory is required and increases the cost, and it has been difficult to perform stable IP conversion processing on a pull-down signal other than a video signal, having a regularity. A filmmode determination apparatus uses one frame memory section (for storing the image of a previous frame) to calculate the correlation between the images of the current frame and the previous frame and stores only an average of the correlation values of images of past several frames and the determination result(1bit) of the average. Consequently, with a small amount of memory and a simple circuit configuration, the filmmode determination apparatus can determine whether input image is a 32 pull-down signal, a 22 pull-down signal, or a video signal.

## Description

### TECHNICAL FIELD

The present invention relates to a film mode determination apparatus and determination method of an image signal, capable of determining whether an input image signal is an image generated via a 32 pull-down method from a movie film, an image generated via a 22 pull-down method from computer graphics (CG) or the like, or a standard television signal generated via a television camera or the like, and to utilize the image determination signal so as to control IP conversion (interlace-progressive conversion) in a previous stage or to control a rate conversion circuit.

### BACKGROUND ART

Television signals include a 32 pull-down signal in which a 24 frames per second film image is converted into a 60 fields per second image by converting two frames of the film image into five frames of the television signal, a 22 pull-down signal in which a 30 frames per second image mainly used in computer graphics or the like is converted into a 60 fields per second field image by converting one frame of the CG into two frames, and a standard television signal (video signal) created one field at a time via a television camera or the like.
Usually, an interlaced signal is displayed as it is on a TV receiver such as a cathode-ray tube or a liquid crystal display, but recently, along with the improvement of image quality of the TV receiver or for receiving the image as a display image on a personal computer, in many cases, the interlace signal is sequentially converted into a progressive signal (IP conversion).

For IP conversion, in the prior art, a certain interlace signal was copied and displayed on the lower line, or two continuous interlace signals were simply stored and displayed as progressive image, but since such prior art method caused deterioration of the resolution of the image in the vertical direction, it is now common to automatically detect whether the image mode is a 32 pull-down signal, a 22 pull-down signal or a video signal, and to convert the image to a progressive signal in response to the mode of the signal.

For example, patent document 1 discloses a method of determining the image mode via a correlation value of an image signal of the current field and image signals of a previous field and a subsequent field so as to switch the field image for creating the progressive image, patent document 2 discloses a method of determining the image mode by utilizing both the correlation value of the image signal of the current field and the image signal of the previous field and the correlation value of the image signal corresponding to two fields prior to the current field so as to switch the field image for creating the progressive image, and patent document 3 discloses a method of utilizing the correlation value of the image signal two fields prior to the current field and considering the luminance change of the image signal so as to switch the field image for creating the progressive image.
[Patent document 1] Japanese patent application laid-open publication No. 11-261972
[Patent document 2] Japanese patent application laid-open publication No. 2002-290927
[Patent document 3] Japanese patent application laid-open publication No. 2002-330408

### SUMMARY OF THE INVENTION

### PROBLEM TO BE SOLVED BY THE INVENTION

However, according to patent document 1 disclosing the prior art, when the difference between fields is obtained as also disclosed in patent document 2, a difference occurs in the vertical high range, and in order to not consider such difference as movement (moving image), it is necessary to set the comparative level to have a certain allowance, according to which erroneous determination of a 32 pull-down image may occur in which a moving image is determined as a still image.

Next, according to patent document 2 of the prior art, the field image for creating the progressive image is switched using the correlation value of the image signal two fields prior to the present field, but since the method utilizes the regularity of the 32 pull-down image in which the image of the current field and the image delayed by two fields becomes the same image once every five fields, the method cannot perform rapid switching of the process especially when the input image is changed from a 32 pull-down image to a video image.

Next, also according to patent document 3 disclosing the prior art, the correlation value of image signal two fields prior to the present field is used together with the luminance change of the image signal so as to switch the field image for creating the progressive image, but similar to patent document 2, it utilizes the regularity of the 32 pull-down image in which the image of the current field and the image delayed by two fields become the same image once every five fields, so that the method cannot perform rapid switching of the process especially when the input image is changed from a 32 pull-down image to a video image.

As described according to the prior art examples, it was difficult to perform film mode determination stably after performing IP conversion which had been performed in digital television systems and the like. An example in which a progressive image subjected to IP conversion via a HDD (hard disk drive) recorder or the like is sent to a display device (television) corresponds to this case. For example, the above-mentioned patent documents disclose a method for performing film determination during IP conversion, but the use of the determination result during IP conversion in the subsequent image forming process is difficult, due to reasons (1) through (3) listed below.
(1) In order to output general-purpose information, it is necessary to prepare a large number of output pins in the LSI, by which costs are increased.
(2) In order to prepare a pin outputting only necessary information in the LSI, it is necessary to recreate the LSI per each image forming process, by which costs are increased.
(3) When outputting the determination result of the film to a resistor or the like, the real-time performance is deteriorated, and it becomes impossible to utilize the information.

If the film mode determination method (such as the above-listed patent documents) used for IP conversion is used as it is, the requirements of the number of frame memories (memory quantity), increase of costs related to the number of pins of the LSI and the real-time performance cannot be satisfied, so it becomes necessary to perform an independent film mode determination in the subsequent image forming section.

With respect to the arts disclosed in the prior art documents, the film mode determination apparatus according to the present invention aims at cutting down the memory quantity by computing the correlation of images between the image of the current frame and a single frame memory (for storing the image data corresponding to one frame prior to the current frame) of the image having been IP converted, and storing only the result thereof ("0" when correlation exists and "1" when no correlation exists).
The present invention further aims at improving the film mode determination accuracy and determination speed via a simple circuitconfiguration, by storing only the quantity of difference of the luminance changing from moment to moment due to the type of the image or the quantity of noise from the exterior upon determining the correlation of the images, and utilizing the information of the difference of the past several frames to determine the correlation.
Furthermore, the above-mentioned idea of the present invention can be applied to improving the film determination accuracy upon performing film determination during IP conversion, so the method thereof will be described later with respect to the preferred embodiments.

### MEANS FOR SOLVING THE PROBLEMS

The film mode determination apparatus according to the present invention comprises an image storage means for storing an image of a previous screen of an input image being temporally entered one screen at a time in a continuous manner, a difference calculation means for calculating a difference between the image of a current screen and the image of the previous screen, a first comparison means for outputting a result of comparing a threshold value 1 and an output of the difference calculation means, an accumulation means for accumulating and outputting one screen worth of output of the first comparison means, an averaging means for averaging a predetermined number of screens of the output of the accumulation means, a second comparison means for comparing the output of the averaging means and the output of the accumulation means, a determination result storing means for storing a predetermined number of screens of the output of the second comparison means, and a correlation determination means for determining a correlation of images based on the contents of the determination result storing means, for determining whether the input image is a 32 pull-down signal, a 22 pull-down signal or a video signal.

### EFFECT OF THE PRESENT INVENTION

According to the present invention, by obtaining the correlation with the previous screen and by averaging the correlation of past several screens, it becomes possible to determine whether the image mode is a 32 pull-down image, a 22 pull-down image or a video image with minimum time delay and with high accuracy, by additionally providing a minimum circuit and a storage device (memory) for storing the image information such as the luminance corresponding to a single screen.

### BRIEF DESCRIPTION OF THE DRAWINGS

[FIG. 1] FIG. 1 is a view illustrating a filmmode determination apparatus according to a first embodiment of the present invention.
[FIG. 2] FIG. 2 is a view illustrating a film mode determination apparatus according to a second embodiment of the present invention.
[FIG. 3] FIG. 3 is a view illustrating a filmmode determination apparatus according to a third embodiment of the present invention.
[FIG. 4] FIG. 4 is an operation flow chart of the film mode determination circuit according to the present invention.
[FIG. 5] FIG. 5 is a view showing the regularity of a 32 pull-down signal (interlace signal).
[FIG. 6] FIG. 6 is a view showing the regularity of a 22 pull-down signal (interlace signal).
[FIG. 7] FIG. 7 is a view showing a video signal (interlace signal, with no regularity).
[FIG. 8] FIG. 8 illustrates examples of the luminance difference, the threshold value 2 and the correlation determination result of a 32 pull-down image.
[FIG. 9] FIG. 9 illustrates examples of the luminance difference, the threshold value 2 and the correlation determination result of a 22 pull-down image.
[FIG. 10] FIG. 10 illustrates examples of the luminance difference, the threshold value 2 and the correlation determination result of a video image.
[FIG. 11] FIG. 11 shows the film mode determination apparatus according to the first embodiment of the present invention (applied to an interlace image).
[FIG. 12] FIG. 12 illustrates examples of the luminance difference, the threshold value 2 and the correlation determination result of a 32 pull-down image, a 22 pull-down image and a video image (applied to an interlace image).

### REFERENCE NUMBERS

- 0: film mode determination means
- 1: IP conversion circuit
- 2: film mode determination circuit
- 20: frame memory
- 21: difference calculation circuit
- 22: first comparator
- 23: accumulator
- 24: average value calculation circuit
- 25: second comparator
- 26: determination result memory
- 27: 32 pull-down determination circuit
- 28: 22 pull-down determination circuit
- 29: video determination circuit
- 30: parameter control circuit
- 31: erroneous determination prevention circuit 1
- 32: erroneous determination prevention circuit 2
- 33: vertical LPF 1
- 34: vertical LPF 2
- 35: field memory
- 101: image storage means
- 102: difference calculation means
- 103: first comparison means
- 104: accumulation means
- 105: averaging means
- 106: second comparison means
- 107: determination result storing means
- 108: correlation determination means
- 109: parameter control means

### BEST MODE FOR CARRYING OUT THE INVENTION

Now, preferred embodiments for carrying out the film mode determination apparatus according to the present invention will be described with reference to the drawings.

### EMBODIMENT 1

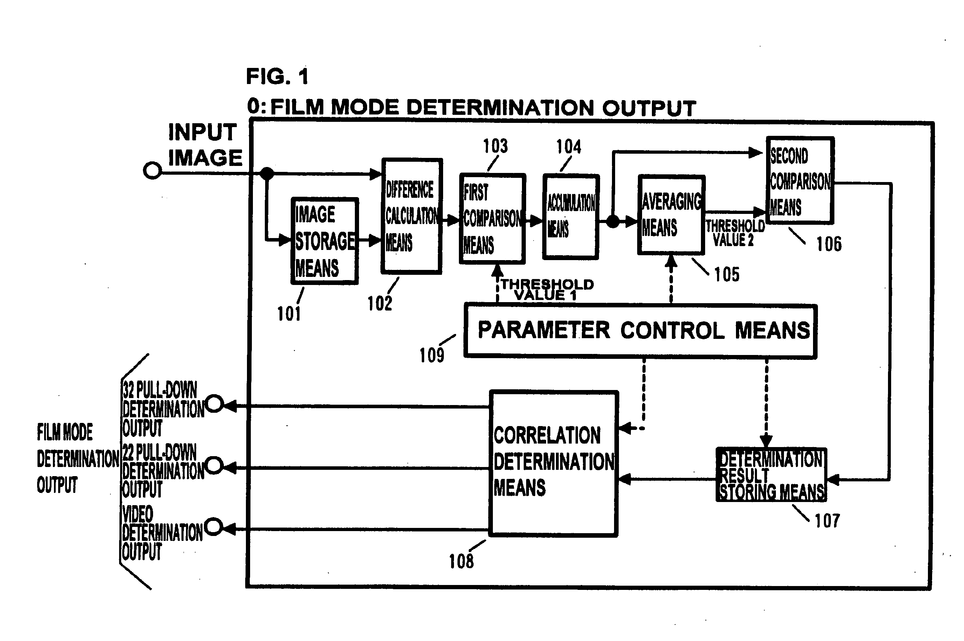

FIG. 1 is a view illustrating a film mode determination apparatus according to a first embodiment of the present invention. In FIG. 1, reference number 101 equipped in a film mode determination means 0 denotes an image storage means for storing the image of a previous screen of an input image, 102 denotes a difference calculation means for calculating a difference between the image of a current screen and the image of a previous screen, 103 denotes a first comparison means for outputting a result of comparison of the output of the difference calculation means and a threshold value 1, and 104 denotes an accumulation means for accumulating and outputting one screen worth of output of the first comparison means. The film mode determination means 0 further comprises an averaging means 105 for averaging a determined number of screens of the output of the accumulation means, a second comparison means 106 for comparing the output of the averaging means and the output of the accumulation means, a determination result storing means 107 for storing a predetermined number of screens of the output of the second comparison means, and a correlation determination means 108 for determining the correlation of the images based on the contents of the determination result storing means, wherein the correlation determination means 108 outputs the result of determination of a 32 pull-down image, a 22 pull-down image, and a video image.

### EMBODIMENT 2

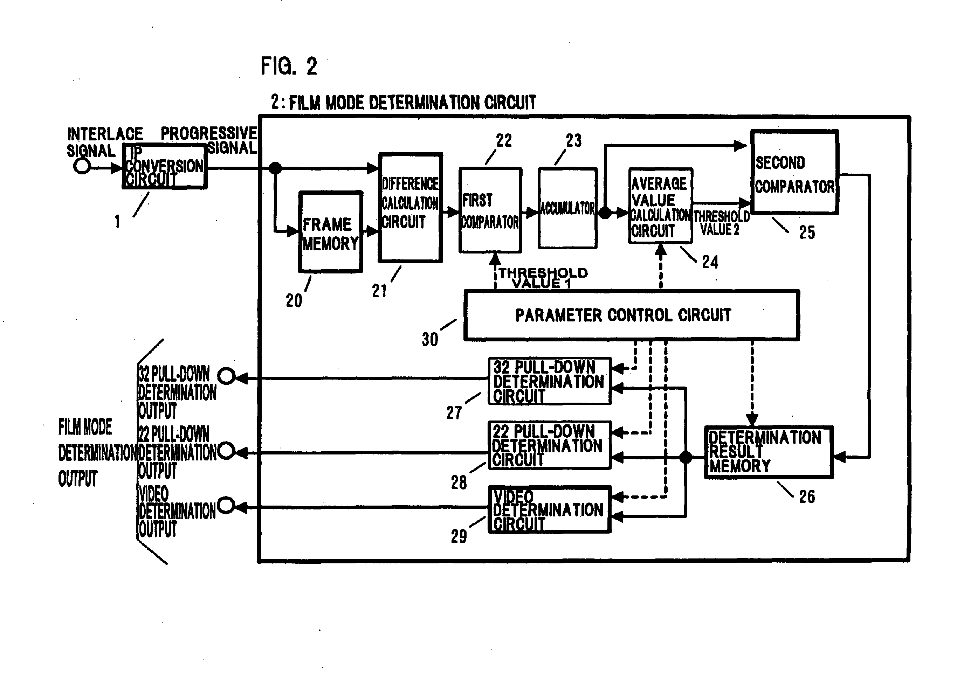

FIG. 2 is a view showing a film mode determination apparatus according to a second embodiment of the present invention. The actual operation will now be described with reference to FIG. 2 regarding a case where the screen according to the present film mode determination apparatus is a "frame signal". In FIG. 2, reference number 1 denotes an IP conversion circuit for converting a television signal sent through interlace to a progressive signal, and 2 denotes a film mode determination circuit composed of the following circuit.

Reference number 20 denotes a frame memory storing an image corresponding to a single frame of the progressive signal (Y signals and RGB signals), 21 denotes a difference calculation circuit for calculating the difference between the image of a current frame and the image of a previous frame in pixel units (of course, the accuracy can be reduced as long as there is no problem in the film determination operation), 22 denotes a first comparator for comparing the output of the difference calculation circuit 21 with a predetermined fixed threshold value 1 and outputting the result, 23 denotes an accumulator for storing the result corresponding to a single frame of the first comparator, 24 denotes an average value calculation circuit for averaging a predetermined number of frames (Na) of the accumulator output, 25 denotes a second comparator for comparing the output of the accumulator 23 and the output of the average value calculation circuit 24, 26 denotes a determination result memory for storing a predetermined number of frames (Nb) of the second comparator output, 27 denotes a 32 pull-down determination circuit for detecting the pattern of a 32 pull-down image from the output of the determination result memory and outputting the determination result, 28 denotes a 22 pull-down determination circuit for detecting the pattern of a 22 pull-down image from the output of the determination result memory and outputting the determination result, 29 denotes a video determination circuit for detecting the pattern of a normal image (video image) other than the 32 and 22 pull-down images from the output of the determination result memory and outputting the determination result, and 30 denotes a parameter control circuit for controlling, based on the instruction from a control microcomputer (not shown) or the like, the threshold value 1 of the first comparator 22, the average number of frames (Na) of the average value calculation circuit 24, the accumulated number of frames (Nb) of the determination result memory 26, a minimum determination number of frames (N1) of the 32 pull-down determination circuit 27, a minimum determination number of frames (N2) of the 22 pull-down determination circuit 28, and a minimum determination number of frames (N3) of the video determination circuit 29.

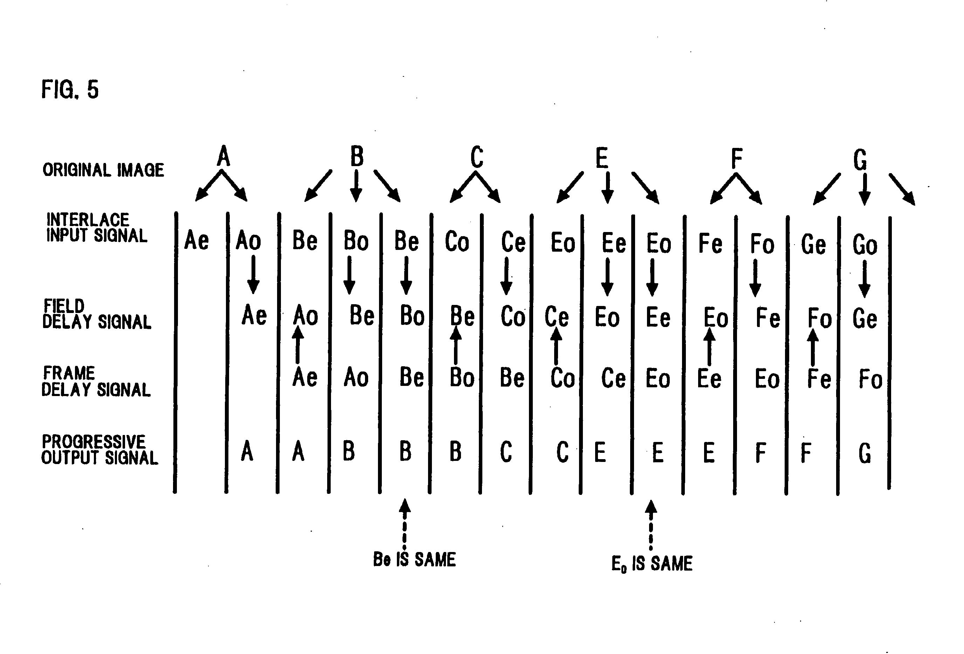

Next, the operation of the respective parts of FIG. 2 will be described. According to the IP conversion circuit 1, in the case of a 32 pull-down interlace signal as shown in FIG. 5, the correlation of adjacent images is high, but even if they are originally the same image A, the line positions represented as Ae (even image) and Ao (odd image) differ, so that in a narrow sense, it is impossible to compare through units of pixels whether the luminance difference and the like of the images are correlated or not. Therefore, as described in the patent document mentioned earlier, the determination of the 32 pull-down interlace signal image is often performed using the regularity in which an interlace signal and a one-frame-delayed interlace signal become the same signal once every five fields.

In this case, however, since the 32 pull-down determination can only be performed once per every five fields, and thus the possibility of erroneous determination is high, it is common to perform determination by accumulating a few dozen fields of determination results to prevent erroneous operation, as disclosed in many patent documents (such as patent document 2). Now, the present invention is described first with reference to the method for determining the 32 pull-down image, the 22 pull-down image and the video image based on a progressive image, which is capable of comparing adj acent frame pixels through pixel units in a narrow sense.

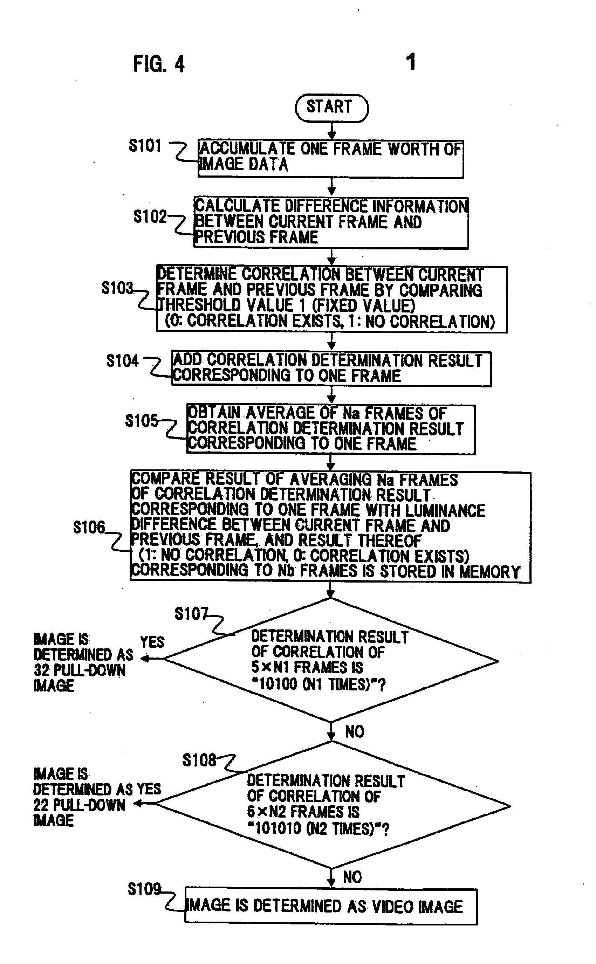

Next, the film mode determination circuit 2 according to the present invention will be shown in FIG. 2. The present embodiment will be described with reference to FIG. 2 and the flowchart of FIG. 4. The progressive image entered in FIG. 2 will have one frame worth of image data stored the frame memory 20. Image data refers to RGB signals and luminance signals of respective pixels and data averaging these data by a few pixels (2, 4, 8, 16 pixels and the like). For sake of explanation, according to the present embodiment, an example where "luminance signals are stored in the memory in units of pixels" is described. (S101) The difference calculation circuit 21 compares the difference per pixel of the luminance signal of the previous frame stored in the frame memory 20 and the luminance signal of the current frame. The difference can be compared using either "an absolute value" or a "square value", for example, but the present embodiment will be described taking "the absolute value" as an example. (S102)

The first comparator 22 compares the absolute value of the luminance difference with the threshold value 1 (which is a fixed value that can be varied via a parameter control circuit 30). The determination result is set to "1" when the absolute value of the luminance difference is greater than the threshold value 1, and set to "0" when the value is smaller than the threshold value 1. (S103)
The accumulator 23 accumulates one frame worth of determination result via a counter circuit that counts up a number when the determination result mentioned above is "1". Of course, this counter is a signal such as a frame synchronizing signal that represents position per frame unit, which must be reset per every frame. (S104)
The output of the accumulator 23 is sent to the following average value calculation circuit 24, which constantly calculates an average value of the accumulator output for the past several frames (Na; Na can be varied via the parameter control circuit 30). (S105)

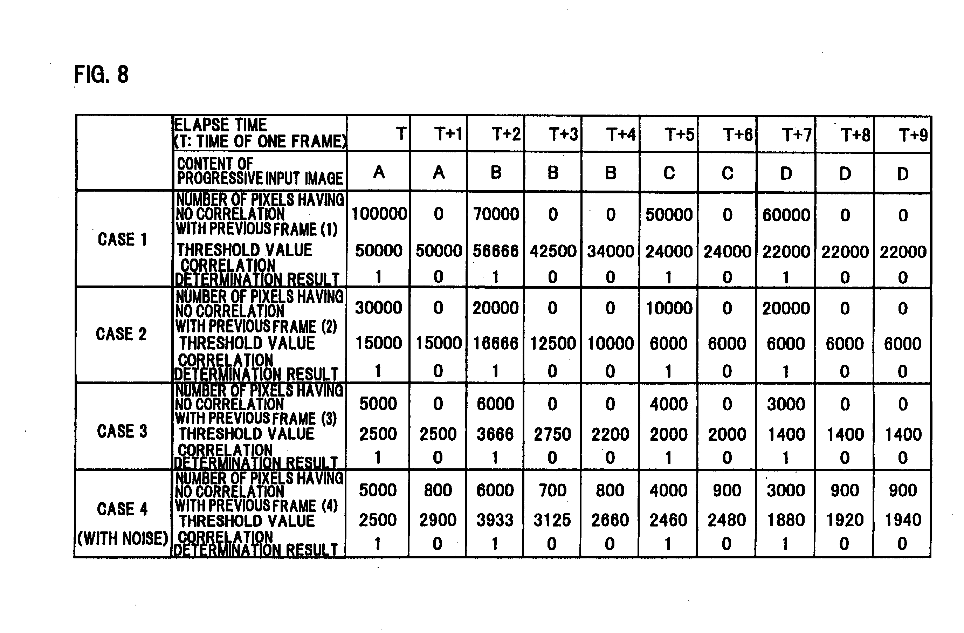

Now, the method for performing a determination of correlation as illustrated in FIG. 8 of the IP-converted 32 pull-down signal (progressive signal) as illustrated in FIG. 5 will be described.
One example of the result of determination of correlation will be illustrated, when the output of the accumulator (number of pixels having no correlation with the image of the previous frame at the same position) is as illustrated in FIG. 8, and the number of frames being averaged via a threshold (threshold 2) is five frames. In FIG. 8, case 1 refers to a case where the image is composed of 24 frames per second in which the whole screen is moving from the previous frame to the current frame, case 3 refers to a case where the image is composed of 24 frames per second in which only a portion of the screen is moving between the previous frame and the current frame, and case 4 refers to a case where the image is partially moving similar to case 3 and where noise has occurred by erroneous determination during the generation of the pull-down image in the former stage (not described in the present application).

In FIG. 8, the image is composed of SD (720 × 480) signals and the number of pixels is 345600 at maximum, so that the number of pixels having no correlation with the image at the same position of the previous frame is 345600 at maximum. Further, when the image is in the order of A, A, B, B, B, C, C, D, D, D (in which A is not correlated with the previous image of A), the number of pixels having no correlation with the pixels at the same position on the previous frame will be close to 0, if the images are the same.

Now, when it is defined that the output of the second comparator 25 (determination result) is "0" when correlation exists and "1" when there is no correlation, the determination results of 10 frames will commonly be "1010010100" regardless of the size of the number of pixels having no correlation with the pixels at the same position on the previous frame as shown in FIG. 8, in other words, it can be recognized that the determination of correlation can be performed stably following the change in the number of pixels having no correlation with the pixels at the same position on the previous frame. Further, the number of frames being averaged (Na) can be varied via the parameter control circuit 30, but in the present embodiment, Na is set to Na = 5. (S106)

Further, even if the image includes noises or errors caused during interlace conversion (which is also equivalent to a noise), the averaging of the image reduces the possibility of the value of threshold 2 being varied significantly.
The determination result whether correlation exists or not corresponding to a predetermined number of frames is stored in a determination result memory 26. The memory information takes up only a single bit ("0" or "1"), so that the storage of data corresponding to a few dozen frames does not affect the scale of the circuit, but for example, it is possible to use a memory for storing the determination result corresponding to five frames and a flag (32 flag) that turns to H when the stored data corresponds to the pattern of a 32 pull-down image, that is, "10100".
The number of frames of the memory for storing the determination result (Nb) can be varied via the control circuit 30, but in the prior art example, for sake of explanation, an example is described in which a memory for storing five frames worth of determination results and a flag (32 flag) are used (Nb = 5). (S106)

The 32 pull-down determination circuit 27 monitors the 32 flag of the determination result memory, and monitors the number of times (N1) in which the 32 flag is continuously set to H. When N1 = 1, the start of a 32 pull-down image is determined using five frames, and when N1 = 2, the same is determined using 10 frames. In contrast, at the end of the 32 pull-down signal, the output of the determination result memory is monitored, and when the position of "0" in "10100" turns "1", it is determined in the next frame that the 32 pull-down image is ended. The 32 pull-down determination circuit outputs an output signal from the start of the 32 pull-down image to the end thereof (L; signal is not a 32 pull-down signal, H; signal is a 32 pull-down signal). (S107)

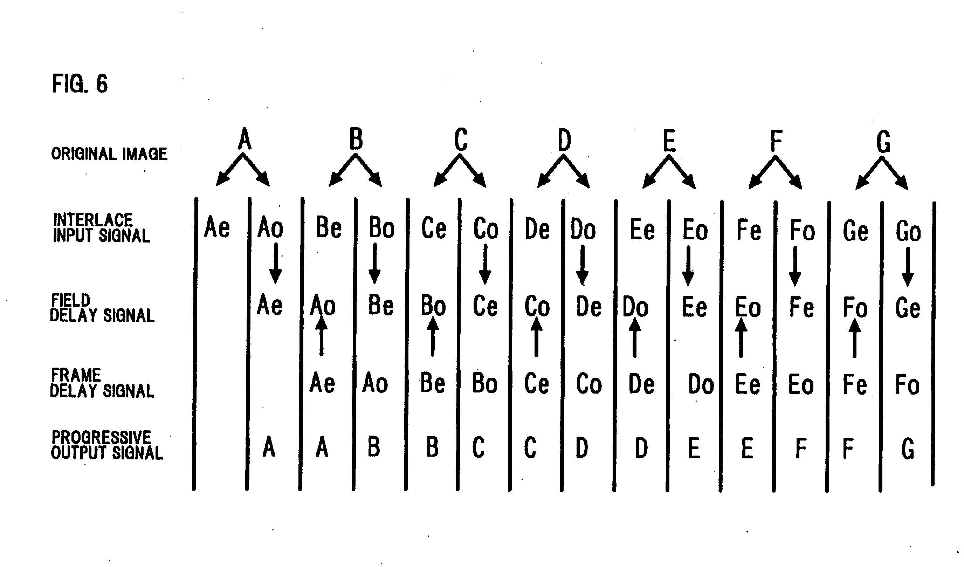

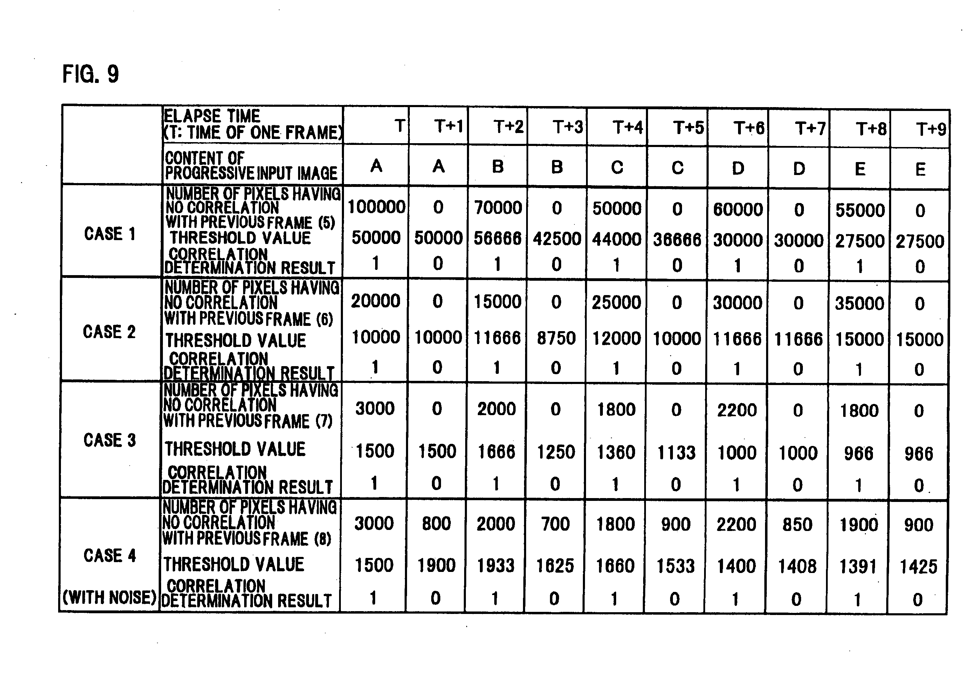

Next, with reference to FIG. 9, we will describe the method similar to FIG. 8 for determining the correlation of an IP-converted 22 pull-down signal (progressive signal) as shown in FIG. 6. An example of the determination result of correlation will be described when the output of the accumulator (the number of pixels having no correlation with the pixels at the same position in the previous frame) is as shown in FIG. 9, and the number of frames being averaged by the threshold (threshold 2) is six frames.

In FIG. 9, the definition of the respective cases and the number of pixels of the SD are the same, so the descriptions thereof are omitted. Now, when the image is in the order of A, A, B, B, C, C, D, D, E, E (wherein A is not correlated with the previous image of A), the determination results corresponding to 10 frames will commonly be "1010010100" regardless of the size of the number of pixels having no correlation with the pixels at the same position on the previous frame, similar to FIG. 9.
In other words, it can be recognized that the determination of correlation can be performed stably following the change in the number of pixels having no correlation with the pixels at the same position on the previous frame. Further, the number of frames being averaged (Na) can be varied via the parameter control circuit 30, but in the present embodiment, Na is set to Na = 6.

Further, even if the image includes noises or errors caused during interlace conversion (which is also equivalent to a noise), averaging reduces the possibility of the value of threshold 2 from being varied significantly. The determination result whether correlation exists or not corresponding to a predetermined number of frames is stored in a determination result memory 26. The memory information takes up only a single bit ("0" or "1"), so that the storage of data corresponding to a few dozen frames does not affect the scale of the circuit, but for example, it is possible to use a memory for storing the determination result corresponding to six frames and a flag (22 flag) that turns to H when the stored data corresponds to the pattern of a 22 pull-down image, that is "101010".

The number of frames of the memory for storing the determination result (Nb) can be varied via the parameter control circuit 30, but in the prior art example, for sake of explanation, an example is described in which a memory for storing six frames worth of determination results and a flag (22 flag) are used (Nb = 6).
The 22 pull-down determination circuit 28 monitors the 22 flag of the determination result memory, and monitors the number of times (N2) in which the 22 flag is continuously set to H. When N2 = 1, the start of a 22 pull-down image is determined in six frames, and when N2 = 2, the same is determined in 12 frames. In contrast, at the end of the 22 pull-down signal, the output of the determination result memory is monitored, and when the position of "0" in "101010" becomes "1", it is determined in the next frame that the 22 pull-down image is ended. The 22 pull-down determination circuit outputs an output signal from the start of the 22 pull-down image to the end thereof (L; image is not a 22 pull-down signal, H; image is a 22 pull-down signal) . (S107)

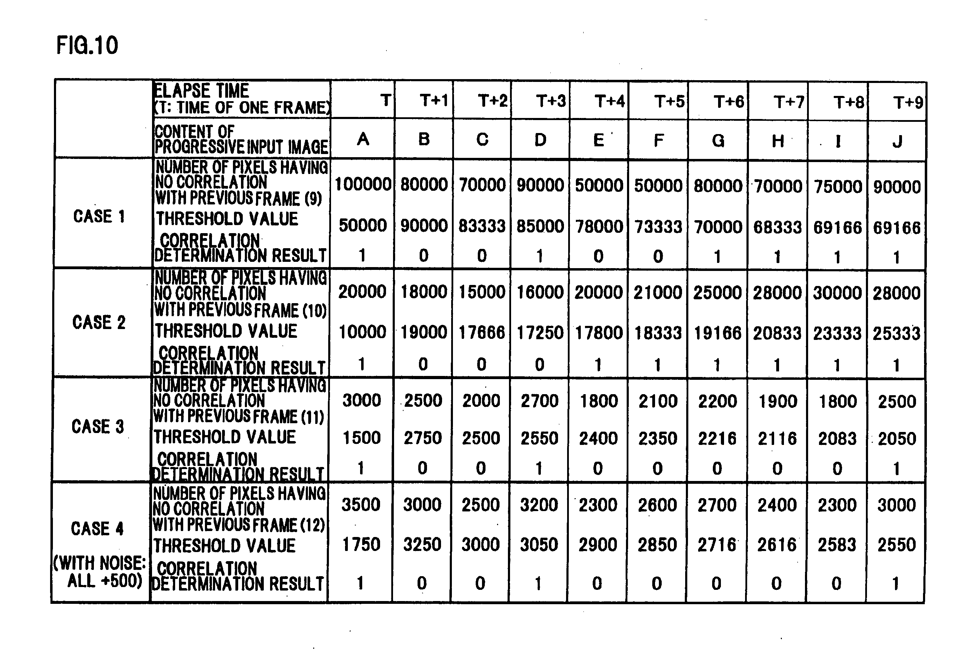

Next, with reference to FIG. 10, we will describe the method for determining the correlation of a video signal (progressive signal) in which a normal signal taken via a TV camera is IP converted as input signal.

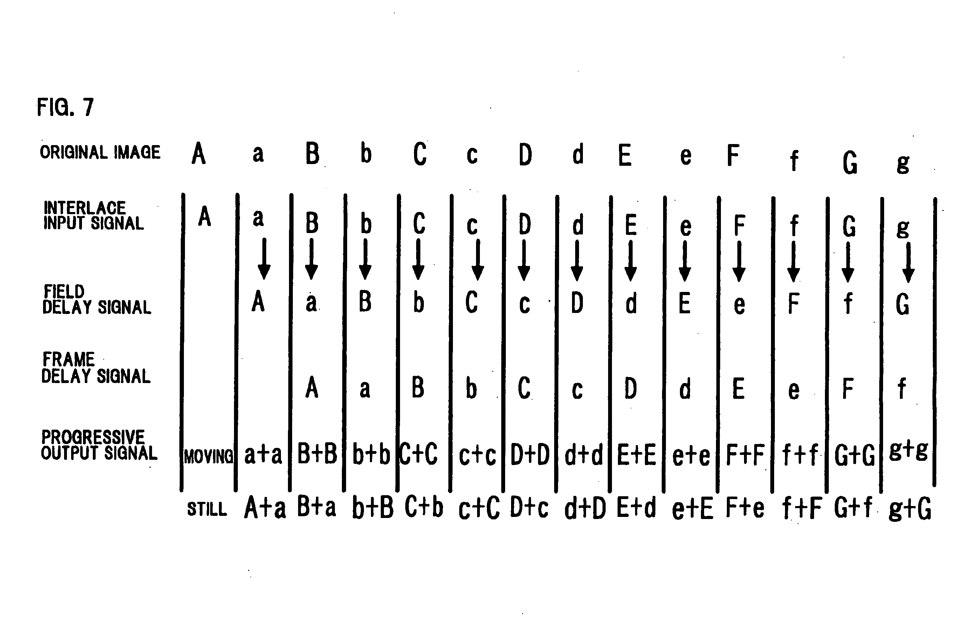

First, we will easily describe the IP conversion process with reference to FIG. 7.
The process performed via the IP conversion circuit 1 of FIG. 7 is different from the process performed via the IP conversion circuit of the 32 pull-down image and the 22 pull-down image of FIGS. 5 and 6. For example, when there is no movement between A and a, the image of a is displayed as it is in the odd and even fields (a + a), and when there is movement between A and a, a progressive image is created by adding the images of A and a corresponding to the movement.

Now, we will illustrate one example of the correlation determination result when the accumulator output (the number of pixels having no correlation with the image at the same position on the previous frame) is as shown in FIG. 10 and the number of frames being averaged by the threshold value (threshold value 2) is five frames. When the image is displayed in the order of A, B, C, D, E, F, G, H, I, J (no correlation exists between the previous image of A and A), the determination result corresponding to ten frames may somewhat vary by the size of the number of pixels having no correlation with the pixels at the same position on the previous frame, as shown in FIG. 10, but it can be recognized that the image has no regularity (such as "10100" or "101010") of a 32 pull-down image or a 22 pull-down image.
A video determination circuit 29 monitors the 32 flag and the 22 flag of the determination result memory 26, and monitors whether the 32 flag or the 22 flag is set to H.
If the 32 flag or the 22 flag is set to L and the determination result corresponding to five (ten) frames is not "10100 (1010010100)" or the determination result corresponding to six (twelve) frames is not "101010 (101010101010)", the video determination circuit outputs an output signal (L: image is not a video signal, H: image is a video signal). (S109)
Also in the case of video, Na, Nb and the minimum number of determination frames (N3) can be controlled via the parameter control circuit 30.

The 32 pull-down determination output, the 22 pull-down determination output and the video determination output can be utilized variously at other areas of the circuit.
For example, the output signal of the respective determination results indicating that the image is 32, 22 or video can be returned to the IP conversion circuit, so as to utilize the IP conversion circuit to perform video or 22 pull-down processes and to prevent the converter circuit from performing the 32 pull-down process and causing erroneous operation (such as combing of the image) until the switching of the 32 pull-down image shown in FIG. 5 even if the image drops out of the 32 pull-down image. Further, since the progressive image can be used to perform film mode determination, the sections having the same images in the 60P image (32 pull-down image and 22 pull-down image) can be detected in real time without having to utilize the IP conversion information of the former stage, so as to delete the image of the corresponding section or to create an image from the previous and following images to create a 60 frames per second moving image or a 120 frames per second moving image that moves smoothly.

### EMBODIMENT 3

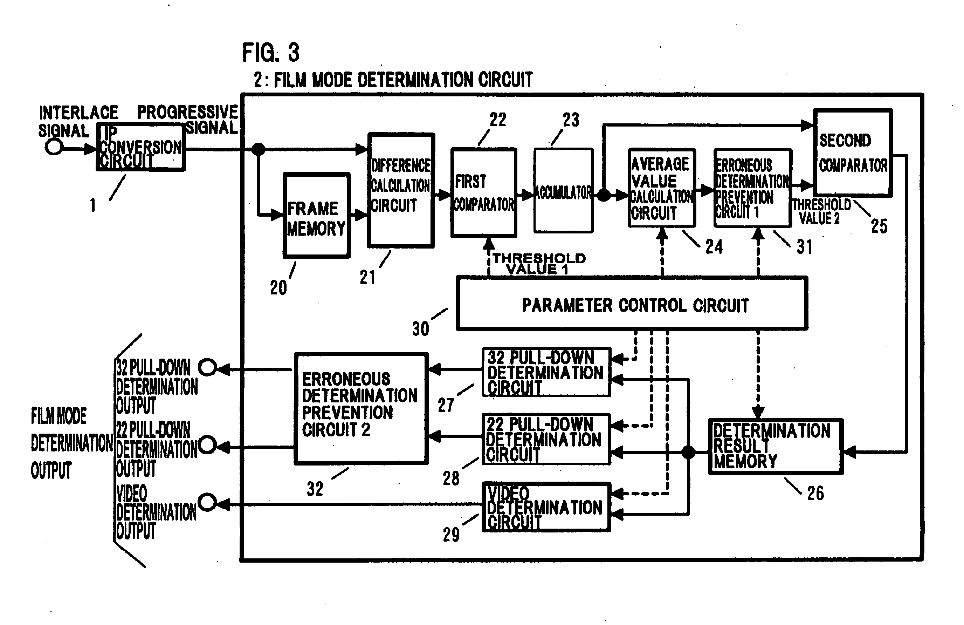

Now, we will describe another preferred embodiment of the film mode determination apparatus according to the present invention. FIG. 3 is a view showing the film mode determination apparatus according to a third embodiment of the present invention. FIG. 3 is equivalent to FIG. 2 except for the following feature, so the explanations of the equivalent portions are omitted. In FIG. 3, reference number 31 denotes an erroneous determination prevention circuit 1, and 32 denotes an erroneous determination prevention circuit 2.
The function of the erroneous determination prevention circuit 1 is to provide a lower limit (NL) and an upper limit (NH) to the output of the average value calculation circuit 24.

The operation of NL will be described. In the example of a 32 pull-down image with little movement, the number of pixels having no correlation with the pixels at the same position in the previous frame, the threshold value 2, and the determination result is as follows (the luminance difference from the previous frame is shown within bracket (), and a five frame average value of the luminance difference (threshold value 2) is shown within bracket []);

| | | | | | | |
|---|---|---|---|---|---|---|
| A(400), | A(0), | (320), | B(0), | B(0), | C(400), | C(0) |
| A[200], | A[200], | B[240], | B[180], | B[144], | C[144], | C[144] |
| "1" | "0" | "1" | "0" | "0" | "1" | "0" |

If a noise of 300 is loaded on the whole image, the data becomes the following, which causes no problem upon performing the 32 pull-down determination;

| | | | | | | |
|---|---|---|---|---|---|---|
| A(700), | A(300), | B(620), | B(300), | B(300), | C(700), | C(300) |
| A[350], | A[500], | B[540], | B[480], | B[444], | C[444], | C[444] |
| "1" | "0" | "1" | "0" | "0" | "1" | "0" |

However, if a noise of 300 is loaded only on sections (0) of A through C, the data becomes the following, which cannot be easily determined as a 32 pull-down image;

| | | | | | | |
|---|---|---|---|---|---|---|
| A(400), | A(300), | B(320), | B(300), | B(300), | C(400), | C(300) |
| A[200], | A[350], | B[340], | B[330], | B[405], | C[324], | C[324] |
| "1" | "0" | "0" | "0" | "0" | "1" | "0" |

In order to prevent erroneous determination, for example, the NL is set to 2000, and when the five frame average value is lower than the set value, the value is fixed to value NL, according to which the above data will be as follows;

| | | | | | | |
|---|---|---|---|---|---|---|
| When A(400), | A(0), | B(320), | B(0), | B(0), | C(400), | C(0); |
| or A(700), | A(300), | B(620), | B(300), | B(300), | C(700), | C(300); |
| or A(400), | A(300), | B(320), | B(300), | B(300), | C(400), | C(300); |
| A[2000], | A[2000], | B[2000], | B[2000], | B[2000], | C[2000], | C[2000] |
| "0" | "0" | "0" | "0" | "0" | "0" | "0" |

According to the above operation, the circuit determines that the image is a still image, and it becomes possible to prevent erroneous determination caused by incidentally reading a "10100" pattern caused via noise or by erroneously determining "1" instead of "0" and reading a "11100" pattern, for example.
Regarding mode termination, when "0" is set on the position that should be set as "1", the circuit determines that the image is nearly a still image (the number of pixels having no correlation with the pixels at the same position in the previous frame is small), and maintains the previously determined mode.

On the other hand, the operation for setting the upper limit (NH) of the output of the average value calculation circuit 24 is as follows, in the case of a video image having a large number of pixels having no correlation with the pixels at at the same position on the previous frame but with a small amount of change compared to a 32 pull-down image or a 22 pull-down image. For example, in the case of a five frame averaging operation, the data is as follows;

| | | | | | |
|---|---|---|---|---|---|
| A(100000), | a(95000), | B(90000), | b(88000), | C(90000), | c(93000) |
| A[50000], | a[97500], | B[95000], | b[93250], | C[92600], | c[91250] |
| "1" | "0" | "0" | "0" | "0" | "1" |

When the number of pixels having no correlation with the pixels at the same position on the previous frame of the upper image incidentally becomes the following, the image is erroneously determined as a 32 pull-down image;

| | | | | | |
|---|---|---|---|---|---|
| A(90000), | a(88000), | B(90000), | b(88000), | C(88000), | c(90000) |

| | | | | | |
|---|---|---|---|---|---|
| A[45000], | a[89000], | B[89300], | b[89000], | C[88800], | c[89000] |
| "1" | "0" | "1" | "0" | "0" | "1" |

In order to prevent such erroneous determination, NH is set to NH=50000, according to which the determination result becomes the following, and erroneous determination of a 32 pull-down image can be prevented.

| | | | | | |
|---|---|---|---|---|---|
| A(90000), | a(88000), | B(90000), | b(88000), | C(88000), | c(90000) |
| A[45000], | a[50000], | B[50000], | b[50000], | C[50000], | c[50000] |
| "1" | "1" | "1" | "1" | "1" | "1" |

As have been described, NL and NH are set so as to prevent a video image from being determined erroneously as a 32 pull-down image via the influence of noise and the like, but of course, it is also effective to prevent the video image from being determined erroneously as a 22 pull-down image.

Next, we will describe the erroneous determination prevention circuit 2 denoted by reference number 32 in FIG. 3.
The erroneous determination prevention circuit 2 functions to stabilize the determination of a 32 pull-down image and a 22 pull-down image. For example, if the image is a 32 pull-down image, the determination will be as follows;

| | | | | | | | | | | |
|---|---|---|---|---|---|---|---|---|---|---|
| Input image: | A, | A, | B, | B, | B, | C, | C, | D, | D, | D |
| Result: | "1", | "0", | "1", | "0", | "0", | "1", | "0", | "1", | "0", | "0" |

In the above example, the position that should be determined as "0" is erroneously determined as "1", as follows;

| | | | | | | | | | | |
|---|---|---|---|---|---|---|---|---|---|---|
| Input image: | A, | A, | A, | B, | B, | C, | C, | C, | D, | D |
| Result: | "1", | "0", | "1", | "1", | "0", | "1", | "0", | "0'", | "1", | "0" |
| | | | X | | | | | | | |

If erroneous determination (X) is performed at the third position of A, the image should originally be determined as a video image and not a 32 pull-down image at the first portion of B, but if the data following the second position of B is correctly determined, the determination that the image is a 32 pull-down image is still maintained.
However, if the regularity of the input image is deteriorated at the joint portion of the 32 pull-down image as follows, the regularity will be deteriorated at this position;

| | | | | | | | | | | |
|---|---|---|---|---|---|---|---|---|---|---|
| Input image: | A, | A, | A, | B, | B, | C, | C, | C, | D, | D |
| Result: | "1", | "0", | "0", | "1", | "0", | "1", | "0", | "0", | "1", | "0" |
| Input image: | D, | E, | E, | F, | F, | F, | G, | G, | H, | H |
| Result: | "0", | "1", | "0", | "1", | "0", | "0", | "1", | "0", | "1", | "0" |
| | | X | | | | | X | | | |

In the above example, the system notices that the regularity is deteriorated at the first section of G, but since regularity is found in the previous six frames, it maintains the determination that the image is a 32 pull-down image. Another example is as follows;

| | | | | | | | | | | |
|---|---|---|---|---|---|---|---|---|---|---|
| Input image: | A, | A, | A, | B, | B, | C, | D, | E, | F, | G |
| Result: | "1", | "0", | "0", | "1", | "0", | "1", | "1", | "1", | "1", | "1" |
| | | | | | | | X | X | | |

Since there is two erroneous determinations and there is no regularity found in the previous five frames, the system cancels the determination that the image is a 32 pull-down image, and determines that the image is a video image. At this time, a 22 pull-down image is determined in the same manner;

| | | | | | | | | | | |
|---|---|---|---|---|---|---|---|---|---|---|
| Input image: | A, | A, | B, | B, | C, | C, | D, | D, | E, | E |
| Result: | "1", | "1", | "1", | "0", | "1", | "0", | "1", | "0", | "1", | "0" |
| | | X | | | | | | | | |

If erroneous determination is performed only once, the system maintains the determination that the image is a 22 pull-down image.

| | | | | | | | | | | |
|---|---|---|---|---|---|---|---|---|---|---|
| Input image: | A, | A, | B, | C, | C, | D, | D, | E, | E, | F |
| Result: | "1", | "0", | "1", | "1", | "0", | "1", | "0", | "1", | "0", | "1" |
| | | | | X | | X | | | | |

According to the above example, erroneous determination is performed two times, but since regularity is found in the previous three frames, the system maintains the determination that the image is a 22 pull-down image.

| | | | | | | | | | | |
|---|---|---|---|---|---|---|---|---|---|---|
| Input image: | A, | A, | B, | B, | C, | c, | D, | d, | E, | e |
| Result: | "1", | "0", | "1", | "0", | "1", | "1", | "1", | "1", | "1", | "1" |
| | | | | | | X | | X | | |

Since erroneous determination is performed two times and there is no regularity found in the previous three frames, the system cancels the determination that the image is a 22 pull-down image, and determines that the image is a video image.

By providing the above-described functions to the erroneous determination prevention circuit 2, it becomes possible to suppress to a minimum the erroneous determination caused via noise and the like to maintain the various modes, and to stably determine the 32 pull-down image, the 22 pull-down image and the video image.

We have described a few of the methods for determining a 32 pull-down image, a 22 pull-down image and a video image after performing IP conversion, but the algorithm of the present invention can be applied at the time of IP conversion by setting up a means for absorbing the field difference upon comparing the luminance difference between the present field and the previous field. This method will now be described.

### EMBODIMENT 4

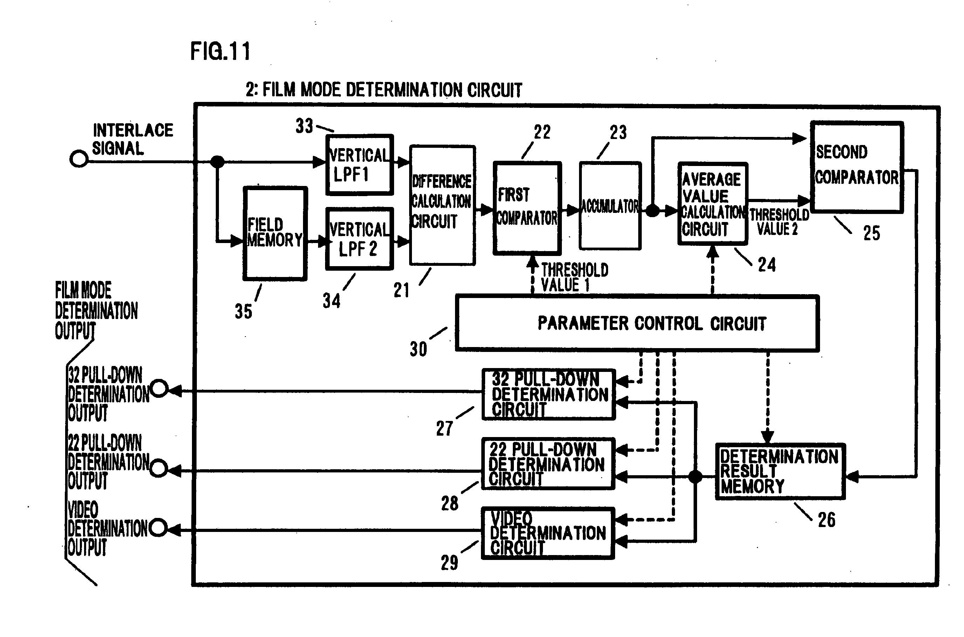

FIG. 11 is a view showing the film mode determination apparatus according to the first embodiment of the present invention. FIG. 11 illustrates a case in which the film determination apparatus according to the present invention is applied to an interlace signal instead of the progressive signal described heretofore. According to the interlace signal, the positions of pixels in the current field and in the previous field differ, so it is not possible to obtain the luminance difference per pixel unit between the prevent field and the previous field as it is, but by inserting an absorption means for absorbing the field difference, such as a vertical LPF 1 (low pass filter 1) denoted by reference number 33 for the current field and a vertical LPF 2 denoted by reference number 21 for the previous field immediately before the difference calculation circuit 21 as described in patent document 2, and dispersing the luminance data in the direction of the lines, it becomes possible to obtain the luminance difference between the current field and the previous field.

In this case, the field memory 35 will store the image of the previous field. However, as disclosed in patent document 2, filters are inserted in a forced manner to solve the state in which the images could not be compared in pixel units like the progressive signal, so that when the difference between fields is obtained, there occurs a difference in the vertical high range even when the image is a still image, and in order to not determine the difference between fields as movement (moving image), it is necessary to set the comparative level to have a certain margin, and in actual operation, it is sometimes not possible to detect movement when the signals are moving not in a vertical high range, and as a result, the system may not be possible to determine that the 32 pull-down image has ended, and still erroneously determine that the image is a 32 pull-down image.

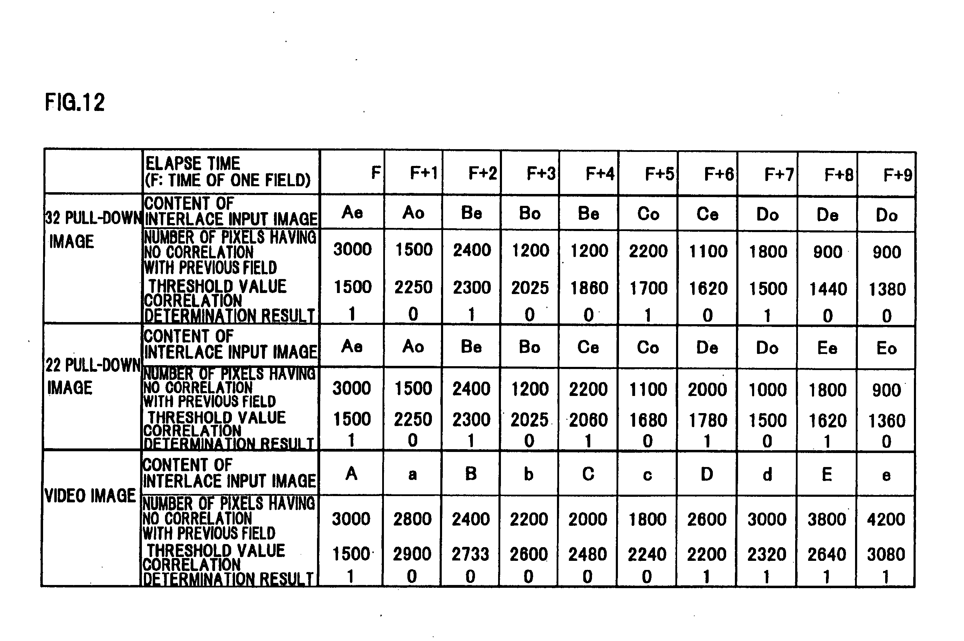

Thus, the present film mode determination apparatus is applied to an interlace image shown in FIGS. 5 through 7, wherein when the vertical LPF is inserted to determine an interlace 32 pull-down image and an interlace 22 pull-down image as shown in FIG. 12, a luminance difference as large as half the image occurs between the same odd and even images, but the present film mode determination apparatus can perform stable correlation determination compared to the case where a fixed threshold value is adopted, and the result of correlation determination becomes "1010010100" in the case of a 32 pull-down image and "1010101010" in the case of a 22 pull-down signal, according to which erroneous film determination can be prevented.

According to the film mode determination apparatus of the present invention, when determination error of the luminance difference between the present field and the previous field after applying an absorption means (such as by inserting respective verticalLPFs) for absorbing the field difference upon performing film mode determination during IP conversion, the present apparatus can be applied as a means for stabilizing the film mode determination during IP conversion.

Now, the embodiments of the present invention (inventions 1 through 10) will be listed hereafter.
A film mode determination apparatus according to present invention 1 comprises an image storage means for storing an image of a previous screen of an input image being temporally entered one screen at a time in a continuous manner, a difference calculation means for calculating a difference between the image of a current screen and the image of the previous screen, a first comparison means for outputting a result of comparing a threshold value 1 and an output of the difference calculation means, an accumulation means for accumulating and outputting one screen worth of output of the first comparison means, an averaging means for averaging a predetermined number of screens of the output of the accumulation means, a second comparison means for comparing the output of the averaging means and the output of the accumulation means, a determination result storing means for storing a predetermined number of screens of the output of the second comparison means, and a correlation determination means for determining a correlation of images based on the contents of the determination result storing means, for determining whether the input image is a 32 pull-down signal, a 22 pull-down signal or a video signal.
The film mode determination apparatus according to present invention 2 relates to the film mode determination apparatus according to invention 1, comprising a first erroneous determination prevention means for correcting an output value of the averaging means to an appropriate value when the output value is an abnormal value.
The film mode determination apparatus according to present invention 3 relates to the film mode determination apparatus according to invention 1, comprising a second erroneous determination prevention means for maintaining a mode when an output of the correlation determination means performs erroneous determination.
The film mode determination apparatus according to present invention 4 relates to the film mode determination apparatus according to invention 1, comprising a parameter control means capable of varying the threshold value 1 of the first comparison means.
The film mode determination apparatus according to present invention 5 relates to the film mode determination apparatus according to invention 1, comprising a parameter control means capable of varying a number of screens to be averaged by the averaging means.
The film mode determination apparatus according to present invention 6 relates to the film mode determination apparatus according to invention 1, comprising a parameter control means capable of varying a number of screens for determining the 32 pull-down signal, the 22 pull-down signal and the video signal respectively.
The film mode determination apparatus according to present invention 7 relates to the film mode determination apparatus according to invention 2, comprising a parameter control means capable of varying a correction value of the first erroneous determination prevention means.
The film mode determination apparatus according to present invention 8 relates to the film mode determination apparatus according to any one of inventions 1 through 7, wherein the input image is a progressive image.
The film mode determination apparatus according to present invention 9 relates to the film mode determination apparatus according to any one of inventions 1 through 7, wherein the input image is an interlace image, and the apparatus further comprises an absorption means for absorbing the difference between a previous field and a current field upon computing the difference between the fields.
The film mode determination apparatus according to present invention 10 relates to the film mode determination apparatus according to invention 9, comprising as the absorption means a first vertical LPF for the current field and a second vertical LPF for the previous field, and capable of determining whether the input image is a 32 pull-down signal, a 22 pull-down signal or a video signal even when the input image is an interlace signal.
Inventions 1 through 10 arranged as above has the following effects.
The film mode determination apparatus according to present invention 1 acquires the correlation between the current screen and the previous screen, and performs averaging of a predetermined number of previous screens, to thereby determine whether the image is a 32 pull-down signal, a 22 pull-down signal or a video signal with minimum time delay and high accuracy by additionally providing a storage device (memory) for storing a screen information such as a luminance of a single screen and a minimum number of circuits.
Present invention 2 enables to prevent erroneous determination via noise when the output of the averaging means is small and to prevent erroneous determination of mode when the output is large.
Present invention 3 enables to stabilize the operation of mode determination by maintaining the determined mode during accidental erroneous determination caused for example by the influence of noise.
Present invention 4 enables to vary the threshold value 1 of the first comparison means via the parameter control means so as to vary the sensitivity (number of accumulation circuits) of whether correlation between images exist or not based on the quality of the input image, according to which the sensitivity is increased when the number is small and the sensitivity is reduced when the number is large.
Present invention 5 has enabled to vary the number of screens being averaged via the parameter control means in response to the level of the change of luminance difference of the input images, according to which the number of screens being averaged is reduced when the change of luminance of the whole image of the device being equipped is large and the number of screens being averaged is increased when the change of luminance of the whole image is small.
Present invention 6 has enabled to vary the respective number of screens of determination for the 32 pull-down signal, the 22 pull-down signal and the video signal via the parameter control means, so that when there is a large number of erroneous determinations, the number of frames for determination is increased, and when there is only a small number of erroneous determinations, the number of frames for determination can be reduced so as to speed-up the mode determination time.
Present invention 7 has enabled to vary the parameter via the parameter control means for preventing erroneous determination of mode when the output of the averaging means is small and when the output thereof is large, so that the determination accuracy can be improved by varying the parameter predicted to have the necessity to be varied in correspondence to to the quality of the input image and the condition of the apparatus (such as the level of noise).
Present invention 8 has enabled the film mode determination apparatus to be applied to a progressive image, so that in the IP-converted image, the image of the current frame and a single frame memory (for storing the image data of the previous frame) are used to compute the correlation between images, and only the result thereof ("0" when there is correlation and "1" when there is no correlation) is stored so as to cut down the memory quantity. Further, in many cases, the 32 pull-down determination can only be performed once every five fields, so the present invention can drop out of the 32 pull-down determination process faster than the common film mode determination during IP conversion.
In applying the present apparatus to a I P conversion circuit, present invention 9 provides a means for absorbing the difference between fields upon applying the present invention to an interlace image, to thereby absorb the unabsorbed difference using an averaging circuit in order to further stabilize the film determination operation of the IP conversion circuit.
According to present invention 10, in applying the present invention to an IP conversion circuit, a vertical LPF is provided to acquire the difference between the previous field and the present field, wherein the problem of having a difference formed in the vertical high area even in a still image can be absorbed via the averaging circuit, to thereby further stabilize the film determination operation in an IP conversion circuit.

Further, the present invention can be arranged as a film mode determination method corresponding to the film mode determination apparatus disclosed in present inventions 1 through 10, a film mode determination program for executing the respective steps in a computer, and a storage medium that can be read via a computer storing the filmmode determination program for executing the respective steps in a computer.

## Claims

1. A film mode determination apparatus comprising:
an image storage means for storing an image of a previous screen of an input image being temporally entered one screen at a time in a continuous manner, a difference calculation means for calculating a difference between the image of a current screen and the image of the previous screen, a first comparison means for outputting a result of comparing a threshold value 1 and an output of the difference calculation means, an accumulation means for accumulating and outputting one screen worth of output of the first comparison means, an averaging means for averaging a predetermined number of screens of the output of the accumulation means, and a second comparison means for comparing the output of the averaging means and the output of the accumulation means,
**characterized in that** the apparatus comprises
a determination result storing means for storing a predetermined number of screens of the output of the second comparison means, and a correlation determination means for determining a correlation of images based on the contents of the determination result storing means, for determining whether the input image is a 32 pull-down signal, a 22 pull-down signal or a video signal.

2. The filmmode determination apparatus according to claim 1, further comprising a first erroneous determination prevention means for correcting an output value of the averaging means to an appropriate value when the output value is an abnormal value.

3. The filmmode determination apparatus according to claim 1, further comprising a second erroneous determination prevention means for maintaining a mode when an output of the correlation determination means performs erroneous determination.

4. The filmmode determination apparatus according to claim 1, further comprising a parameter control means capable of varying the threshold value 1 of the first comparison means.

5. The filmmode determination apparatus according to claim 1, further comprising a parameter control means capable of varying a number of screens to be averaged by the averaging means.

6. The filmmode determination apparatus according to claim 1, further comprising a parameter control means capable of respectively varying a number of screens for determining the 32 pull-down signal, the 22 pull-down signal and the video signal.

7. The filmmode determination apparatus according to claim 2, further comprising a parameter control means capable of varying a correction value of the first erroneous determination prevention means.

8. The filmmode determination apparatus according to claim 1, wherein the input image is a progressive image.

9. The filmmode determination apparatus according to claim 1, wherein the input image is an interlace image, and the apparatus further comprises an absorption means for absorbing the difference between a previous field and a current field upon computing the difference between the fields.

10. The film mode determination apparatus according to claim 9, comprising as the absorption means a first vertical LPF for the current field and a second vertical LPF for the previous field, and capable of determining whether the input image is a 32 pull-down signal, a 22 pull-down signal or a video signal even when the input image is an interlace signal.

11. A film mode determination method comprising the steps of:
storing an image of a previous screen of an input image being temporally entered one screen at a time in a continuous manner to an image storage means;
calculating a difference between the image of a current screen and the image of the previous screen via a difference calculation means;
outputting a result of comparison of a threshold value 1 and an output of the difference calculation means via a first comparison means; and
accumulating and outputting one screen worth of output of the first comparison means via an accumulation means;
**characterized in that** the method further comprises
averaging a predetermined number of screens of the output of the accumulation means via an averaging means;
comparing the output of the averaging means and the output of the accumulation means via a second comparison means;
storing a predetermined number of screens of the output of the second comparison means via a determination result storing means; and
determining a correlation of images based on the contents of the determination result storing means via a correlation determination means, for determining whether the input image is a 32 pull-down signal, a 22 pull-down signal or a video signal.

12. The film mode determination method according to claim 11, further comprising correcting an output value of the averaging means to an appropriate value when the output value is an abnormal value via a first erroneous determination prevention means.

13. The film mode determination method according to claim 11, further comprising maintaining a mode when an output of the correlation determination means performs erroneous determination according to a second erroneous determination prevention means.

14. The film mode determination method according to claim 11, further comprising varying the threshold value 1 of the first comparison means via a parameter control means.

15. The film mode determination method according to claim 11, further comprising varying a number of screens to be averaged by the averaging means via a parameter control means.

16. The film mode determination method according to claim 11, further comprising varying a number of screens for determining the 32 pull-down signal, the 22 pull-down signal and the video signal, respectively, via a parameter control means.

17. The film mode determination method according to claim 12, further comprising varying a correction value of the first erroneous determination prevention means via a parameter control means.

18. The film mode determination method according to claim 11, wherein the input image is a progressive image.

19. The film mode determination method according to claim 11, wherein the input image is an interlace image, and upon computing the difference between a previous field and a current field, the difference between the fields is absorbed via an absorption means.

20. The film mode determination method according to claim 19, wherein the absorption means includes a first vertical LPF for the current field and a second vertical LPF for the previous field, and the method is capable of determining whether the input image is a 32 pull-down signal, a 22 pull-down signal or a video signal even when the input image is an interlace signal.
